# EUROPEAN PATENT APPLICATION

(11) **EP 1 684 523 A1**
(43) Date of publication of application: **26.07.2006**
(21) Application number: 05111856.0
(22) Date of filing: 08.12.2005
(51) Int. Cl.: H04N 7/26, H04N 7/50

(54) **Motion picture encoder, motion picture decoder, and method for generating encoded stream**

(30) Priority: 21.01.2005 JP 2005014244
(71) Applicant: KABUSHIKI KAISHA TOSHIBA, Tokyo 105-8001 (JP)
(72) Inventor: Kikuchi, Yoshihiro, 105-8001, Tokyo (JP)
(74) Representative: Henkel, Feiler & Hänzel

(57) **Abstract**

The present invention restricts the arrangement of parameter sets (SPS and PPS) to enable a stream to be easily decoded on the basis of random accesses. In a stream including a plurality of first units (P) each containing unit identification information and image compressed data as well as a reference target unit information, and a plurality of second units (SPS and PPS) each containing unit identification information and a parameter set referenced in order to decode the image compressed data, a third unit (GOVU) is defined which is obtained by partitioning the stream. The reference target unit information contained in the first unit in the third unit is set only for the identification information on the second unit present in the third unit.

## Description

The present invention relates to a motion picture encoder, a motion picture decoder, and a method for generating an encoded stream. In particular, the present invention relates to a technique for making handling of image compressed data convenient when decoding the data by setting a certain information unit, as well as the structure of a stream.

In recent years, techniques for encoding and decoding motion pictures have been increasingly developed. This is due to the improved quality of motion pictures, an increase in the amount information available, and the development of wired or wireless networks leading to growing demands for transmission of image information through the networks.

The motion picture encoding and decoding technique is desired to have a high compression efficiency, a high decoding quality, a high transmission efficiency, and the like. A motion picture encoding and decoding technique called H.264/AVC (Advanced Video Coding) has recently been documented and accepted as an international standard.

H.264/AVC defines a sequence parameter set (SPS) and a picture parameter set (PPS).

SPS is header information on the entire sequence such as a profile, a level, and an encoding mode for the entire sequence.

The profiles used include a baseline profile, a main profile, and a high profile and require different encoding tools. The level specifies transmission rate, image size, and the like and ranges from 1 to 5.1. For the entire sequence, the processing capabilities of a decoder depend on the combination of the level and profile. In this case, the sequence is composed of motion pictures but may include units each consisting of a specified number of frames (for example, 20 to 30 frames).

PPS is information on units smaller than SPS. PPS is header information indicative of an encoding mode (for example, an entropy encoding mode or a quantization parameter initial value for each picture) for all the related pictures.

When a decoder decodes compressed data on motion pictures, a controller in the decoder references SPS and PPS. A decode operation of the decoder is controlled in accordance with the parameters. Accordingly, if the parameter sets (SPS and PPS) are arranged in a stream, they must be sent to the decoder before the compressed data referencing the parameter set is. This condition is defined in H.264/AVC. A related document is H.264 TEXTBOOK H.264/AVC compiled under the supervision of Sakae Ohkubo and edited by Shinya Kakuno, Yoshihiro Kikuchi, and Teruhiko Suzuki.

In the conventional H.264/AVC, the parameter sets (SPS and PPS) are freely arranged in a stream as described above. That is, to arrange the parameter sets (SPS and PPS) in the stream, they have only to be set so as to reach the decoder before the data referencing the parameter sets does. Thus, an unrelated parameter set or compressed data may be placed between the parameter sets and the data referencing them.

However, the above rule presents a problem if decoding of compressed data starts in the middle of the stream or if the compressed data starts to be decoded on the basis of random accesses after the stream has been recorded on recording media. That is, the data referencing the parameter sets cannot reference the desired parameter sets.

Thus, it is an object of an aspect of the present invention to provide a motion picture encoder, a motion picture decoder, and a method for generating an encoded stream in which if the parameter sets (SPS and PPS) are arranged in a stream, the arrangement is restricted so that a decode process can be started in the middle of the stream and so that the stream can be decoded on the basis of random accesses.

It is an object of another aspect of the present invention to provide a motion picture encoder, a motion picture decoder, and a method for generating an encoded stream in which the stream is partitioned into certain information units and a method for arranging the parameter sets (SPS and PPS) in the information units is improved so that a decode process can be started in the middle of the stream and so that the stream can be decoded on the basis of random accesses.

An embodiment according to the present invention provides a method for generating an encoded stream including a plurality of first units each containing unit identification information and image compressed data as well as a reference target unit information (or number), and a plurality of second units (PPS and SPS) each containing unit identification information (or number) and a parameter set referenced in order to decode the image compressed data, the first and second units being arranged in a temporal series,
wherein a third unit (GOVU) is defined so that the stream is partitioned into predetermined information units (GOUV) each containing the first and second units, and the reference target unit information (or number) contained in the first unit in the third unit is set only for the identification information (or number) on the second unit (PPS) present in the third unit.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing the basic configuration of a motion picture encoder in accordance with the present invention;
FIG. 2 is a diagram showing the basic configuration of a decoder in accordance with the present invention;
FIG. 3 is a diagram illustrating a stream structure in accordance with the present invention;
FIG. 4 is a diagram illustrating the types and contents of NAL units in accordance with the present invention;
FIG. 5 is a diagram illustrating typical types of NAL units in accordance with the present invention;
FIG. 6 is a diagram illustrating rules for the interior of GOVU of interest which rules are the point of the present invention;
FIGS. 7A and 7B are diagrams schematically illustrating the rules for the interior of GOVU of interest which rules are the point of the present invention;
FIG. 8 is a flowchart showing one of operations of the encoder shown in FIG. 1 which is an essential part of the present invention; and
FIG. 9 is a flowchart showing one of operations of the decoder shown in FIG. 2 which is an essential part of the present invention.

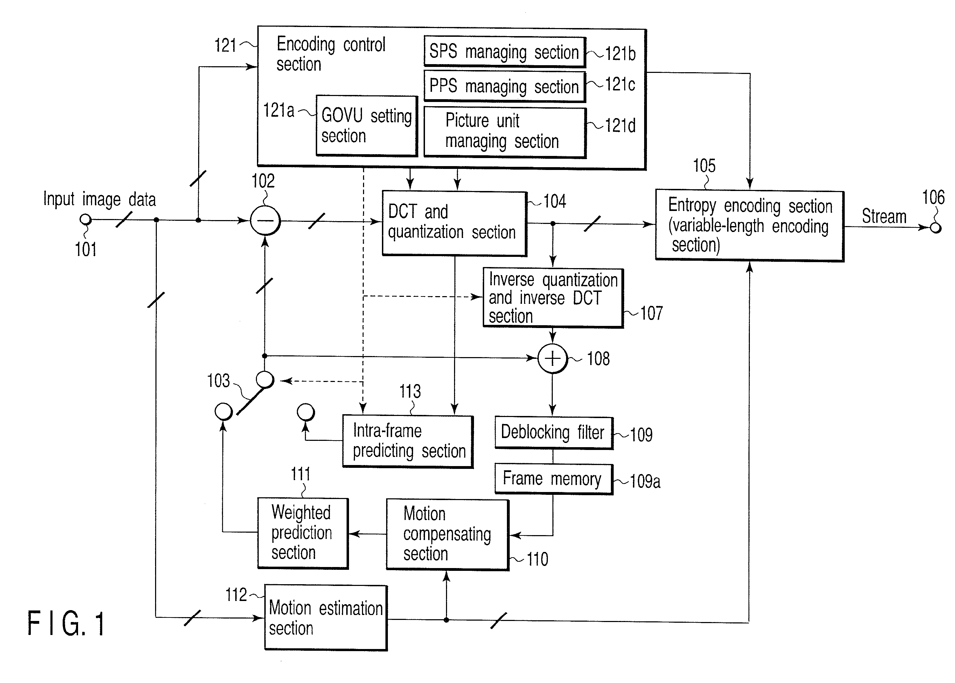

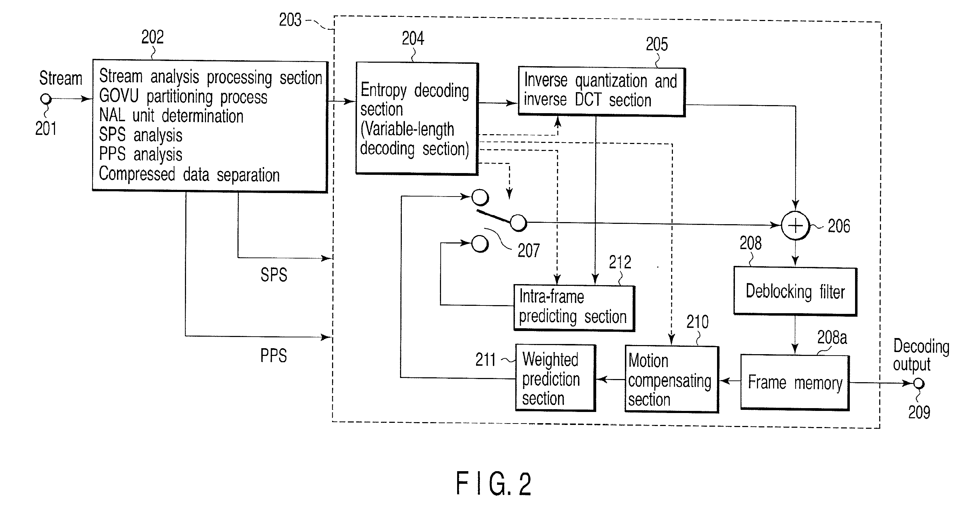

An embodiment of the present invention will be described with reference to the drawings. FIG. 1 is a simplified view of an encoder that encodes image data on the basis of the H.264/AVC standards. FIG. 2 is a simplified view of a decoder that decodes image compressed data contained in a stream output by the encoder shown in FIG. 1.

In FIG. 1, image data supplied to an input terminal 101 is provided to a subtractor 102. The subtractor 102 subtracts image data from a switch 103, from the input image data during an inter-frame process. Output data from the subtractor 102 is subjected to a discrete cosine transforming process and a quantization process by a DCT and quantizing section 104. An output from the DCT and quantizing section 104 is then subjected to variable-length encoding by an entropy encoding section (that may also be referred to as a variable-length encoding section) 105. The output is then led out to an output terminal 106 as a stream.

An output from the DCT and quantizing section 104 is input to an inverse quantization and inverse DCT section 107 for an inverse transformation. An adder 108 then adds the inversely transformed data to the image data from the switch 103 to reproduce and output a frame image. The output from the adder 108 is input to a deblocking filter 109 in order to suppress the distortion around the block boundary into which the image data has been partitioned by the DCT process and quantizing process.

The image data output by the deblocking filter 109 is input to a frame memory 109a. A motion compensating section 110 reads encoded images from the frame memory 109a on the basis of an image motion vector from a motion vector detecting section 112 to generate data on predicted images. That is, the motion compensating section 110 generates predicted images on the basis of the motion information so that the already encoded images stored in the frame memory 109a are similar to the images input to the input terminal 101. The motion estimation detecting section 112 uses the image data input to the input terminal 101 to detect a motion vector indicative of motion in motion pictures. The motion vector is also referenced by the data. Accordingly, the motion vector is sent to the entropy encoding section 105 and inserted into a header of a predetermined transmission unit.

For the output image data from the motion compensating section 110, a weighted prediction section 111 predicts the brightness of the images and weights and outputs the images. The image data output by the weighted prediction section 111 is provided to the subtractor 102 via the switch 103.

The image data from the weighted prediction section 111 contains predicted images made as similar to the input image data as possible. Consequently, an output from the subtractor 102 has an efficiently reduced data amount. This means a high compression efficiency.

In this case, if a scene change or the like occurs, an intra-frame compressing process is executed. That is, an intra-frame predicting section 113 predicts the interior of a image frame on the basis of already encoded pixels around a block to be encoded. The subtractor 102 then subtracts an intra-frame prediction signal from the image data input to the input terminal 101. The result of the subtraction is led to the DCT and quantization section 104.

In this manner, in a loop formed of the DCT and quantization process 104, intra-frame predicting section 113, switch 103, and subtractor 102, an image compressing process for one frame is executed. Image data (referred to as an I (Intra) slice) compressed into a frame is inversely transformed and decoded by the inverse quantization and DCT section 107. A deblocking filter 109 then reduces the distortion on the block boundary of the decoded data. The resulting data is then stored in a frame memory 109a. This image data is image compressed data obtained using the data contained only in the frame. The image data is used as a reference for reproduction of a plurality of frames of each motion picture.

Here, the encoding control section 121 includes a controller. The controller includes a GOVU setting section 121a, an SPS managing section 121b, a PPS managing section 121c, a picture unit managing section 121d, and the like. SPS stands for a sequence parameter set, and PPS stands for a picture parameter set.

The encoding control device 121 manages input image data and generates management information (for example, the parameter sets SPS and PPS) required to decode image compressed data. The encoding control device 121 also sets an information unit (GOVU) for a stream.

The encoding control device 121 generates and manages, for example, management information (reference target unit information) on a picture (slice) unit. A detailed description will be given of GOVU and the management information (for example, the parameter sets) later.

The decoder in FIG. 2 will be described. The above stream is input to an input terminal 201. The stream is then input to a stream analysis processing section 202. The stream analysis processing section 202 executes a separating process in accordance with the type of the data unit, the above GOVU partitioning process, and a process for analyzing the management information (parameter sets SPS and PPS).

The separated image compressed data is input to an entropy decoding section (that may also be referred to as a variable-length transforming section) 204 in a decoder 203. The entropy decoding section 204 then executes a decoding process corresponding to the entropy encoding section 105 in FIG. 1.

The image compressed data is input to an inverse quantization and inverse DCT section 205 for decoding. An adder 206 adds output data from the inverse quantization and inverse DCT section 205 to reference image data from a switch 207 to reproduce image data. A deblocking filter 208 reduces block distortion in the image data output by the adder 206. Output image data from the deblocking filter 208 is led out to an output terminal 209 as a decoding output. The output image data is also stored in an image memory 208a.

A motion compensating section 210 uses sent information on a motion vector to correct the motion in the decoded image data stored in the image memory 208a. A weighted prediction section 211 then weights the brightness of the corrected image data output by the motion compensating section 210. The weighted prediction section 211 inputs the image data to the adder 206 via the switch 207. When image data (that may also be referred to as an I (Intra) slice or an IDR (Instantaneous Decoding Refresh) picture) compressed into a frame arrives, a path is constructed for the inverse quantization and inverse DCT section 205, an intra-frame predicting section 212, the switch 207, the adder 206, the deblocking filter 208, and the motion compensating section 210. Then, intra-frame image compressed data is decoded, and image data for one frame is constructed in an image memory 208a in the motion compensating section 210. The intra-frame encoded image data is utilized as reference image data.

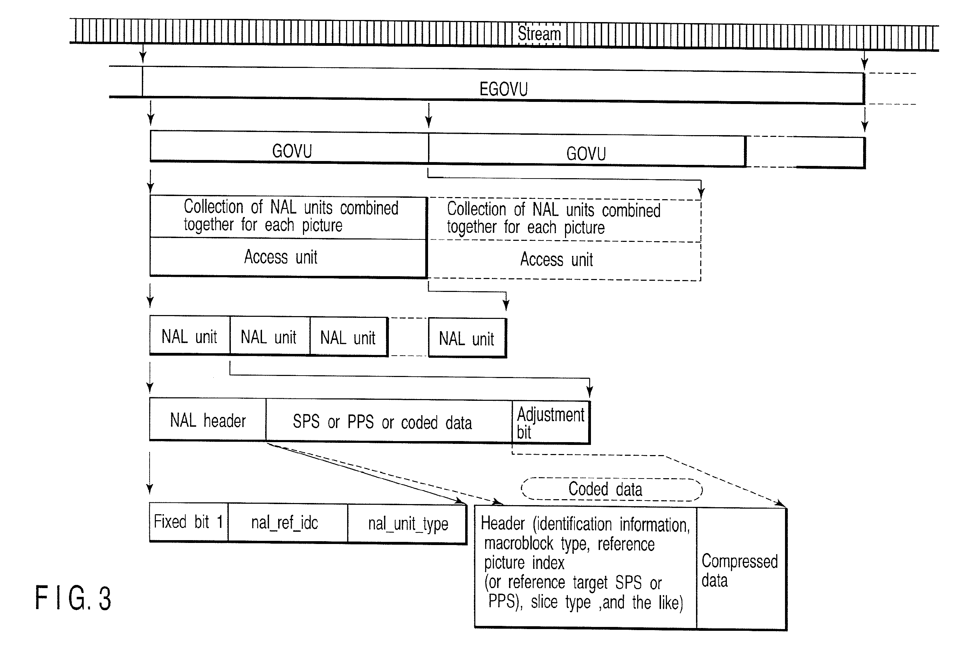

FIG. 3 is a hierarchical structure of the above stream which conforms to the H.264/AVC standards and to which the present invention is applied. The stream is referred to as, for example, a VOB (Video Object Unit). The stream is partitioned into major units called EGOVU (Extended-Group Of Video Units). One EGOVU has one or more GOVUs (Groups Of Video Units). EGOVU is not necessarily required, and the stream may be partitioned directly into GOVUs.

One GOVU contains one or more access units. One access unit contains a plurality of NAL (Network Abstraction Layer) units. NAL is located between a video recording layer (VCL) and a lower system (layer) that transmits and stores encoded information. NAL associates VCL with the lower system.

The NAL unit is composed of a NAL header and RBSP (Raw Byte Sequence Payload; raw data obtained by compressing motion pictures) in which information obtained by VCL is stored. Accordingly, there are plural types of NAL units. The type of the NAL unit can be determined on the basis of nal_unit_type in a NAL header. nal_ref_idc is described in the NAL header and utilized as identification information for the NAL unit. That is, nal_ref_idc indicates whether or not to reference the present NAL unit.

The data contents of the RBSP portion include SPS, PPS, and encoded information compressed data. These pieces are distinguished from one another using nal_unit_type.

The RBSP portion also has a header. The following information is described in the header: identification information (for example, a number), a macroblock type, a referenced picture information (for example, a number), reference target SPS information (for example, a number), reference target PPS information (for example, a number), a motion vector for a motion compensation block, and the like. If the NAL unit is for the parameter set (SPS or PPS), SPS information (for example, a number) or PPS information (for example, a number), reference target SPS information (for example, a number), and the like are described in the head. Parameter information is described in a compressed data portion.

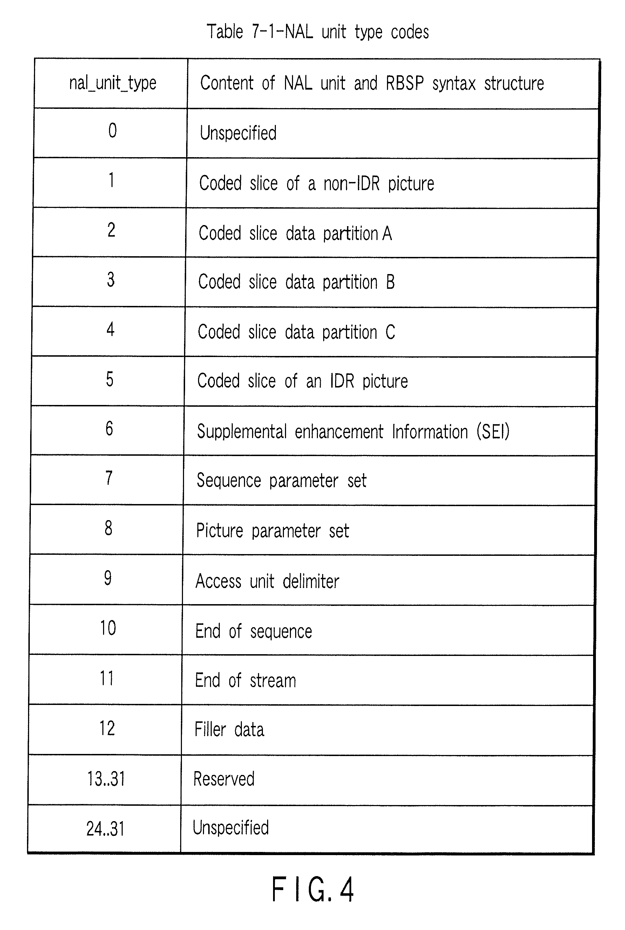

FIG. 4 shows identifiers indicative of the types of NAL units and the contents of the identifiers.

The access unit is a collection of plural NAL units (slices) of each picture. One or more access units may be present in GOVU. The access unit contains one or more VCL NALs each containing encoded information compressed data. Further, SPS, PPS, and other additional information may be present in the access unit. One PPS may always be added to the access unit so that all the slices constituting the access unit reference the same PPS.

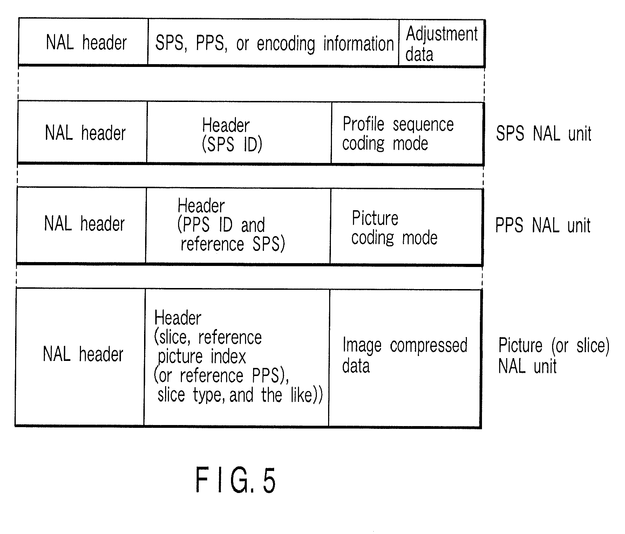

FIG. 5 shows various types of NAL units. An SPS NAL unit has information such as a profile in a data portion. A header of the data portion contains an SPS number (SPS ID) that is its own identification number. A PPS NAL unit has information such as an encoding mode in a data portion. A header of the data portion contains a PPS number (PPS ID) that is its own identification number. The number of SPS to be referenced (reference target SPS number) is also described in the header. A VCL NAL unit has image compressed data in a data portion. A header of the data portion contains the identification number of the VCL NAL unit, a referenced picture number indicative of a picture to be referenced (or a reference target PPS number used to identify PPS to be referenced), motion vector information on a motion compensation block, a slice number, and the like.

As described above, the reference target PPS number (PPS ID) used to identify PPS to be referenced is described in the VCL NAL unit. The reference target SPS number (SPS ID) used to identify SPS to be referenced is described in the PPS NAL unit. Special rules are set for the relationship between the reference target unit information (referred to as a reference target unit number below) and GOVU. That is, there are characteristic associations between the identification numbers and the reference target numbers, indicating the reference targets.

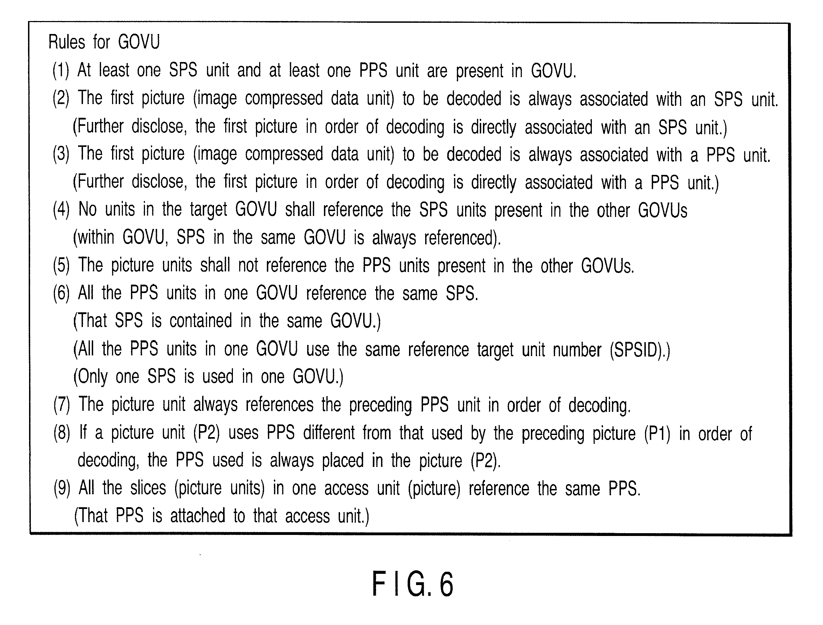

FIG. 6 shows the following rules.
(1) At least one SPS unit and at least one PPS unit are present in one target GOVU.
(2) The first picture (image compressed data unit) in decoding order is always associated with an SPS unit.
   (2') Further disclose, the first picture in order of decoding is directly associated with an SPS unit.
(3) The first picture (image compressed data unit) in decoding order is always associated with a PPS unit.
   (3') Further disclose, the first picture in order of decoding is directly associated with a PPS unit.
(4) No units in the target GOVU shall reference the SPS units present in GOVUs different from the target one (within the target GOVU, SPS in the same GOVU is always referenced).
(5) No units in the target GOVU shall reference the PPS units present in GOVUs different from the target one.
(6) All the PPS units in the target GOVU reference the SPS of the same GOVU.
   (6') That SPS is attached to the first access unit of the GOVU.
   (6'') All the PPS units in the target GOVU contain the same reference target SPS ID.
   (6''') Only one SPS is used in the target GOVU.
(7) In the target GOVU, the image compressed data units are associated with the PPS units so that each of the image compressed data units references the preceding PPS unit in order of decoding.
(8) If the preceding access unit in order of decoding uses a second PPS different from the associated first PPS, the corresponding second PPS is placed in this access unit.
(9) All the slices (NAL units) in one access unit (picture) reference the PPS of the same GOVU.
   (9') That PPS is attached to the first access unit of the GOVU.

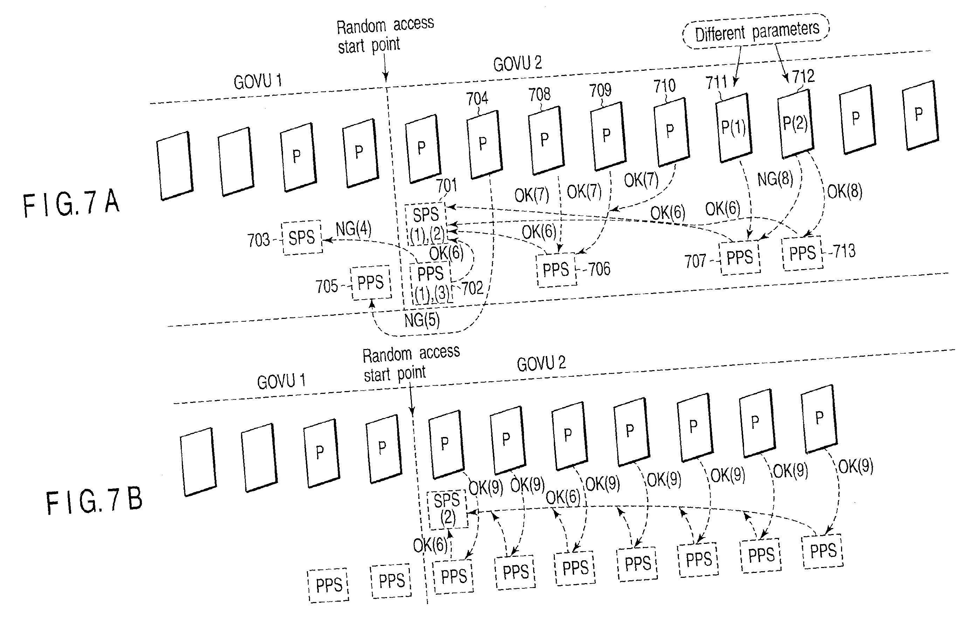

FIGS. 7A and 7B show rules for assignment of reference unit numbers within one GOVU. FIGS. 7A and 7B show GOVU1 and a target GOVU2. P denotes each of the image compressed data units contained in one access unit (picture). SPS denotes a sequence parameter set unit. PPS denotes a picture parameter set unit. (1) to (8) correspond to the contents of the rules shown in FIG. 6 and described above. Dotted arrows show the directions of references. Each dotted arrow with the characters OK means that the corresponding reference is permitted. Each dotted arrow with the characters NG means that the corresponding reference is prohibited.

With reference to the example in FIG. 7A, description will be given of the relationship between arranged SPSs and PPSs and the above rules. In accordance with rules (1) and (2), SPS 701 is attached to the leading access unit of GOVU2. In accordance with rules (1) and (3), PPS 702 is attached to the leading access unit of GOVU2. In accordance with rule (4), PPS 702, which is present in GOVU2, is prohibited from referencing SPS 703, which is present in a different GOVU (GOVU1). In accordance with rule (5), PPS 704, which is present in GOVU2, is prohibited from referencing SPS 705, which is present in the different GOVU (GOVU1). In accordance with rule 6, all PPSs present in GOVU2 reference the same SPS 701. In accordance with rule 7, access units 708, 709, and 710 located between PPS 706 and the succeeding PPS 707 all reference PPS 706. In accordance with rule 8, if two access units 711 and 712 reference different PPSs, PPS 713 is attached to the access unit 712.

FIG. 7B shows an example in which of the above rules, (2), (6), (6'), (9), and (9') are applied to the stream. In accordance with rule (2), SPS is attached to the first access unit of GOVU2. In accordance with (9) and (9'), PPS is attached to each access unit, and all the VCL NAL units (slices) in that access unit reference that PPS. In accordance with (6) and (6'), all the PPSs in GOVU2 reference the same SPS attached to the first access unit of GOVU2.

To realize signal processing based on the above rules, the encoding control section 121 of the encoder executes GOVU setting, SPS processing, and PPS processing.

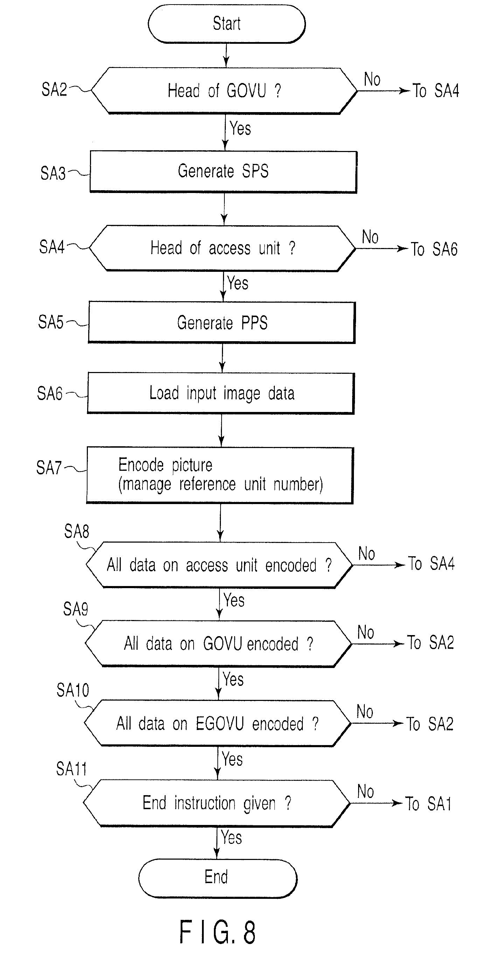

FIG. 8 shows a flowchart used to realize the above signal processing. In accordance with the stream structure shown in FIG. 3, an encoding process is executed using the above units in order of decreasing unit size, that is, in the order of EVOBU, GOVU, access units, and slices. A sequence parameter set (SPS) is generated at the head of GOVU (steps SA2 and SA3). A picture parameter set (PPS) is generated at the head of an access unit (steps SA4 and SA5). Then, the slices are specifically encoded (steps SA6 and SA7). The encoder determines whether or not all the data for the access unit has been encoded (step SA8). Further, to determine parameter sets and referenced pictures for decoding, the reference target unit number is managed. If the encoder does not determine in step SA8 that all the data for the access unit has been encoded, the process returns to step SA4. If the encoder determines in step SA8 that all the data for the access unit has been encoded, it then determines whether or not all the data for the next GOVU has been encoded (step SA9). If the encoder does not determine that all the data for GOVU has been encoded, the process returns to step SA2. If the encoder determines that all the data for GOVU has been encoded, it then determines whether or not all the data for EVOBU has been encoded (step SA10). If the encoder does not determine that all the data for EVOBU has been encoded, the process returns to step SA2. If the encoder determines that all the data for EVOBU has been encoded, it then determines whether or not an end instruction has been given (step SA11). If the encoder does not determine that an end instruction has been given, the process returns to step SA1. If the encoder determines that an end instruction has been given, the encode operation is finished.

The units containing the generated image compressed data, SPS, and PPS are output to the output terminal 106 as a stream.

When data processing is executed in accordance with the flowchart in FIG. 8, the rules described in (1) to (8) are applied. The encoder includes means for realizing the rules. The encoding control section 121, shown in FIG. 1, is a controller on which the realization of the rules is based. The main blocks in the encoding control section 121 include the GOVU setting section 121a, the SPS managing section 121b, the PPS managing section 121c, and a picture (slice) unit managing section 121d. The encoding control section 121 assigns identification numbers to the respective units and utilizes these identification numbers to assign reference target unit numbers on the basis of the above rules.

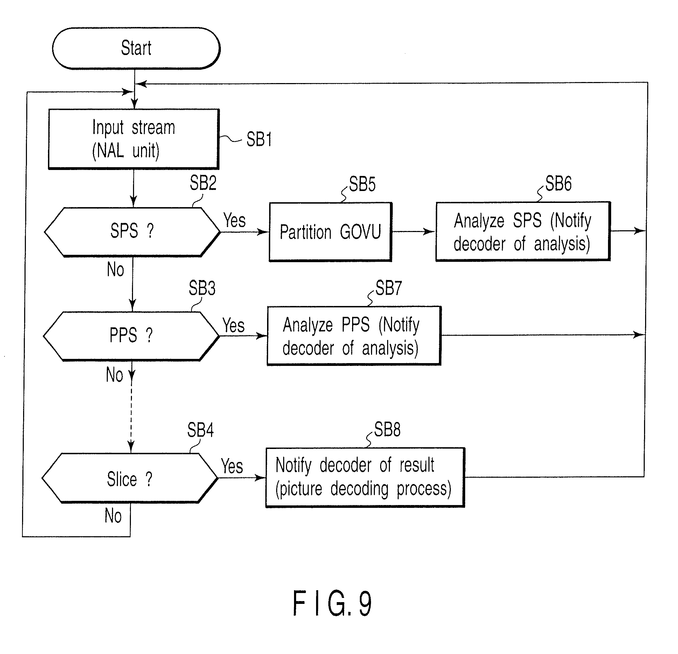

FIG. 9 is a flowchart showing operations performed by the stream analysis processing section 201 in the decoder (FIG. 2), which receives and decodes the above stream. When the stream is input to the decoder, the NAL header of each NAL unit is processed. Since nal_unit_type is described in the NAL header as shown in FIG. 3, the type of the NAL unit can be identified, that is, the NAL unit can be determined to be of the VCL type containing image compressed data or for SPS or for PPS (FIG. 5).

In step SB1, the NAL unit is identified, and in step SB2, the stream analysis processing section 201 determines whether or not the NAL unit is for SPS. If the NAL unit is not for SPS, then in step SB3, the stream analysis processing section 201 determines whether or not the NAL unit is for PPS. If the NAL unit is not for PPS, then in step SB4, the stream analysis processing section 201 determines whether or not the NAL unit is of the VCL type. FIG. 9 shows the expression "slice?" in step SB4 because the H.264/AVC standards use the term "slice" as an image compression unit.

If an SPS NAL unit is detected in step SB2, this is determined to be the head of the target GOVU as is apparent from the above description of the rules. Accordingly, a delimiter for the head of the target GOVU is set for the input current stream. A delimiter for the tail of the preceding GOVU is set for the stream preceding the current one (step SB5). Then, SPS is restored and analyzed starting with the SPS NAL unit. A predetermined setting section in the decoder which is suitable for the parameter set is notified of this. SPS is then stored.

If a PPS NAL unit is detected in step SB3, SPS is restored and analyzed and a predetermined setting section in the decoder is notified of this. SPS is then stored.

Thus, an encoding mode is set for the decoder on the basis of SPS or PPS. Then, in step SB4, when a VCL NAL unit is detected, the image compressed data in its data portion is decoded by the decoder 203.

As described above, the embodiment includes a plurality of characteristic inventions. This will be described below in brief. The present invention is characterized by the above stream structure, an encoding method and an encoder which implements such a stream structure, and a decoding method and a decoder which implements such a stream structure.

The present invention is concerned with a stream including a plurality of first units (P) each containing unit identification information (or number) and image compressed data as well as a reference target unit information, and a plurality of second units (PPS and SPS) each containing unit identification information (or number) and a parameter set referenced in order to decode the image compressed data, the first and second units being arranged in a temporal series.

The embodiment is concerned with a stream including a plurality of first units (P) each containing unit identification information (or number) and image compressed data as well as a reference target unit information, and a plurality of second units (PPS and SPS) each containing unit identification information (or number) and a parameter set referenced in order to decode the image compressed data, the first and second units being arranged in a temporal series.

A third unit (GOVU) is defined so that the stream is partitioned into predetermined information units (GOUV) each containing the first and second units.

The parameter set reference target unit information contained in the first unit (P) in the target third unit (GOVU) is limited to the identification information (number) on the second unit (PPS) present in the target third unit and is prohibited from specifying the identification information (numbers) in the other third units, which are different from the target one.

The reference unit information contained in the unit (PPS) in the target third unit (GOVU) is limited to the identification information (number) on the unit (SPS) present in the target third unit and is prohibited from specifying the identification information (numbers) in the other third units, which are different from the target one.

The requirements described below may be added. The second units are a sequence parameter set (SPS) unit and a picture parameter set (PPS) unit, respectively. SPS is information on the entire sequence of the target third unit to which it belongs. SPS further contains information on at least a profile, a level, and an encoding mode for the entire sequence. PPS is information on the entire relevant picture. PPS further contains information on at least an entropy encoding mode and an encoding mode for a quantization parameter initial value for each picture.

Moreover, the following requirement may be added. A single the SPS unit is present in the third unit (GOVU). The following requirement may also be added. The PPS unit and the SPS unit are associated with one of the first units in the target third unit which is to be decoded first in the target third unit.

The following requirement may further be added. A plurality of the PPS units are associated with the target third unit so as to reference the same SPS unit in the target third unit.

The following requirement may further be added. Each of the first units is associated with the target third unit so as to reference the preceding PPS unit in order of decoding. The following requirement may further be added. If the parameter set contents referenced by each first unit are different from those referenced by the succeeding first unit in order of decoding, a new second unit is placed immediately before the succeeding first unit.

With the above means, referencing the parameter sets in GOVU enables the image compressed data in GOVU to be decoded. This makes it possible to independently access each GOVU. Therefore, this structure is effective for random access.

## Claims

1. A method for generating an encoded stream including a plurality of first units (704) each containing unit identification information and image compressed data as well as a reference target unit information, and a plurality of second units (701 and 702) each containing unit identification information and a parameter set referenced in order to decode the image compressed data, the first and second units being arranged in a temporal series,
**characterized in that** a third unit (GOVU2) is defined so that the stream is partitioned into predetermined information units (GOUV2) each containing the first and second units, and
parameter set reference target unit information contained in the first unit is set only for the identification information on the second unit present in the third unit containing the first unit.

2. The method according to claim 1, **characterized in that** the second units are a sequence parameter set (SPS) unit including information on an entire sequence of the third unit (GOVU2) to which the sequence parameter set unit belongs, and a picture parameter set (PPS) unit including information on the entire relevant picture.

3. The method according to claim 2, **characterized in that** a single sequence parameter set unit is present in the third unit.

4. The method according to claim 2, **characterized in that** the picture parameter set unit and the sequence parameter set unit are associated with one of the first units in the third unit (GOVU2) which is to be decoded first in the third unit.

5. The method according to claim 2, **characterized in that** a plurality of the picture parameter set units are associated with the third unit so as to reference the sequence parameter set unit in the third unit.

6. The method according to claim 2, **characterized in that** each of the first units is associated with the third unit so as to reference the preceding PPS unit in order of decoding.

7. The method according to claim 2, **characterized in that** if parameter set contents referenced by each first unit are different from those referenced by the succeeding first unit in order of decoding, a new picture parameter set unit is placed immediately before the succeeding first unit.

8. The method according to claim 2, **characterized in that** the third unit contains one or more access unit, and all slice units in one access unit refer to the picture parameter sets in the same access unit.

9. A motion picture encoder which obtains a stream (EGOVU) including a plurality of first units (704) each containing unit identification information and image compressed data as well as a reference target unit information, and a plurality of second units (701 and 702) each containing unit identification information and a parameter set referenced in order to decode the image compressed data, the first and second units being arranged in a temporal series, the encoder **characterized by** comprising:
a third unit setting section (121a) which defines a third unit (GOVU2) so that the stream is partitioned into predetermined information units (GOUV2) which the first unit refer only to the first and second units, and
a slice unit managing section (121d) which sets the identification information which the first unit refer only to the second unit present in the third unit containing the first unit.

10. The motion picture encoder according to claim 9, **characterized in that** comprising means executes management such that the second units are a sequence parameter set unit including information on an entire sequence of the third unit to which the sequence parameter set unit belongs, and a picture parameter set unit including information on an entire relevant picture.

11. The motion picture encoder according to claim 10, **characterized by** further comprising means for executing management such that a single sequence parameter set unit is present in the third unit.

12. The motion picture encoder according to claim 10, **characterized by** further comprising means for executing management such that the picture parameter set unit and the sequence parameter set unit are associated with one of the first units in the third unit which is to be decoded first in the third unit.

13. The motion picture encoder according to claim 10, **characterized by** further comprising means for executing management such that a plurality of the picture parameter set units are associated with the third unit so as to reference the same sequence parameter set unit in the third unit.

14. The motion picture encoder according to claim 10, **characterized in that** each of the first units is associated with the third unit so as to reference the preceding PPS unit in order of decoding.

15. The motion picture encoder according to claim 10, **characterized in that** if parameter set contents referenced by each first unit are different from those referenced by the succeeding first unit in order of decoding, a new picture parameter set unit is placed immediately before the succeeding first unit.

16. A motion picture decoder which decodes a stream including a plurality of first units each containing unit identification information and image compressed data as well as a reference target unit information, and a plurality of second units each containing unit identification information and a parameter set referenced in order to decode the image compressed data, the first and second units being arranged in a temporally series,
the decoder having a third unit defined so that the stream is partitioned into predetermined information units each containing the first and second units, parameter set reference target unit information contained in the first unit being set only for the identification information on the second unit present in the third unit containing the first unit, the decoder **characterized by** comprising:
means (SB6 and SB7) for detecting the second units (SB2 and Sb3) in the stream to partition the third unit (SB5) and setting the parameter set contained in the detected third unit so that the parameter set is used to decode image compressed data; and
means (SB8) for detecting the first unit in the stream (SB4) and supplying a decode section with the image compressed data contained in the detected first unit.

17. The motion picture decoder according to claim 16, **characterized in that** the second units are a sequence parameter set unit including information on an entire sequence of the third unit to which the sequence parameter set unit belongs, and a picture parameter set unit including information on an entire relevant picture.
